# EUROPEAN PATENT APPLICATION

(11) **EP 1 785 455 A1**
(43) Date of publication of application: **16.05.2007**
(21) Application number: 05762284.7
(22) Date of filing: 30.06.2005
(51) Int. Cl.: C09C 3/06, C09C 1/00

(54) **MODIFIED PEARLESCENT PIGMENT AND ITS PRODUCTION**

(30) Priority: 01.07.2004 CN 200410069524
(71) Applicant: Lin, Yizhong, Wenzhou Zhejiang 325025 (CN)
(72) Inventor: LIN, Yizhong, A503 BinHai Zone, Zhejiang 325025 (CN); JIN, Wensong, A503 BinHai Zone, Zhejiang 325025 (CN)
(74) Representative: Bublak, Wolfgang
(86) International application number: PCT/CN2005/000953
(87) International publication number: WO 2006/002595

(57) **Abstract**

The invention relates to a modified pearlescent pigment and its production process by post-coating. The pigment includes a sheet substrate, titanium dioxides coated on the substrate and hydrates of metal phosphate (s) and metal oxide (s) on the titanium dioxide coating. This pigment could keep color stable during its use and exhibit excellent discoloration resistance caused by ultraviolet as well as prevent yellowing during its use in use polyolefin compositions containing antioxidant.

## Description

### Field of the invention

This invention relates to a post-treated pearl pigment and its production. The said pearl pigment has excellent color stability. The coating of the pearl pigment enhances remarkably its resistance to color shift and to loss of luster caused by UV exposure and also prevents yellowing when it is used in polyolefin containing antioxidants.

### Background of the invention

Pearl pigments are made by coating a platy substrate with metal oxides, which commonly are titanium dioxide and iron (III) oxide. Owing to the refraction, reflection, interference and absorption of light, colors ranging from silver white to various pearlescent colors can be displayed.

Because the titanium dioxide used to coat platy- substrates in producing pearl pigments is photoactive, it can react with resins under UV exposure when used in plastic, varnish or ink, causing yellowing or loss of luster. When pearl pigments are added to polyolefins containing antioxidants, the antioxidants (aniline or phenol derivatives) can react with titanium dioxide, causing yellowing.

JP6-16964 first introduced a post-treated pearl pigment to solve the problems mentioned above. In this patent, the surfaces of silver pearl particles are coated in order with hydrous silicone, aluminum and zinc oxide to reduce the effect of heat or light on titanium dioxide coating. However, the color stability of the said pigment is not satisfactory.

EP 0641842A disclosed a new method in which mica based pearl is further coated with calcium borate. The said pigments is used to prevent yellowing when it is used in plastic.

US 5376698 disclosed a method of post-treatment where the surface of pearl pigments is coated with silicone and aluminum oxide. The said pigment is used in plastic to prevent yellowing caused by UV or antioxidant.

US546749 proposed a new method of post-treatment of pearl pigment where pearl pigment is coated with oxides or hydroxides of silicon, aluminum and zinc. The said pigment is used to prevent yellowing caused by UV or reaction with antioxidant when it is used in plastic.

Us5688341, US5951750 and CN1261388 disclosed a method for modifying the mica based pearl pigment through post-treatment in which the post coating was calcined at 850°C, thereby to form a coating consisting of at least one or more oxids and phosphorous compound of zinc, aluminum and silicon or magnesium, calcium, cerous and yttrium .Which could prevent the pigment yellowing when used in plastics. The major features of this invention are the crystal structure of titanium dioxide and the decrease of specific surface area of pigment. Therefore, the anti-yellowing property was enhanced. (Phosphor in the coating is pentavalent after calcination).

### Disclosure of the invention

In this invention, it was found that when pearl pigment coated with titanium dioxide layer is further coated with metal salts of phosphorous acid and hydrous metal oxides, its pearlescent luster stability and resistance to color change in application is remarkably improved.

In this invention, the modified pearl pigments only need to be dried at 100 - 200°C and calcination is not applied. Thus, not only is the production process simplified, but also the composition of metal salts of phosphorous acid and hydrous metal oxides is maintained. The metal salts of phosphorous acid are aluminum phosphite, zinc phosphite and magnesium phosphite, etc. The hydrous metal oxides are hydrous aluminum oxide (or aluminum hydroxide), hydrous zinc oxide (or zinc hydroxide), hydrous magnesium oxide (or magnesium hydroxide), etc. (Phosphor in the post treatment layer is trivalent). Metal phosphite is a good antioxidant. Phosphorous acid and phosphite are major components of the photo stabilizer in polyolefins. Metal phosphites themselves such as zinc phosphite are good UV screening agent. The data of comparison test indicated that post treatment layer form by metal salts of phosphorous acid and hydrous metal oxides has more excellent anti-yellowing property.

In this invention, a pearl pigment with stable color is developed. Its structure consists of a platy substrate, titanium dioxide coated on the said substrate, the post treatment layer formed by metal salts of phosphorous acid and hydrous metal oxides. The amount of phosphite in metal phosphite, when calculated as phosphor element, is 0.01 - 2.0 wt% but preferably 0.02 - 1.0 wt% of titanium dioxide. The kind of metal in said metal salts of phosphorous acid and hydrated metal oxides is selected at least one kind from the group consisting of aluminum, zinc, zirconium and magnesium and the content , when calculated as the metal element , is 0.1 - 7.0 wt%, but preferably 0.1 -5.0 wt% of the titanium dioxide. Furthermore, the above treated pearl pigment can further be coated with silicon oxide or hydrous silica of which the amount, when calculated as silicon element, is 0.2 - 3.0 wt% but preferably 0.2 - 2.5 wt% of the titanium dioxide.

The production of modifying pearl pigments is detailed as following:
1. Add pearl pigment coated with titanium dioxide layers into deionized water. mixing well, so as to obtain a suspension The suspension is stirred and heated to 20 - 100°C, preferably to 50 - 80°C.
2. Add phosphorous acid or phosphites. If sodium phosphorite is used, the pH will increase. Diluted HCl is added to lower the pH to below 2.0
3. Add at least one of the soluble salt of Al, Zn and Mg, mix well and then add alkaline solution slowly to raise the pH of the suspension to 4.0 - 8.0, but preferably to 5.5 - 6.5. Keep on agitating for 10 - 15 min. during this time, the added phosphorous acid or phosphites will react with the soluble salt of Al, Zn and Mg and the metal phosphorite and hydrous metal oxides thus produced will precipitated on to the pearl pigment surface.
4. Filter the suspension, thereby isolate the pigment particles. Wash the particles to remove soluble salt and dry the pigment at 100 - 300°C, but preferably 100 - 200°C to obtain modified pearl pigments.

In the above process, the following step can be operated in between step 3 and 4:the aqueous solution of silicate is added slowly without controlling pH. The hydrous silica formed will precipitate on to the pearl pigment surface.

In the post treatment, the suitable phosphorous acid and phosphorite are phosphorous acid, sodium phosphorite, sodium hydrogen phosphorite, potassium phosphorite, potassium hydrogen phosphorite etc.

Suitable metal salt are water soluble such as soluble chloride, soluble nitrate, soluble sulfate and their soluble hydrates etc.

Suitable soluble silicate is preferably sodium silicate.

The post-treated pearl pigments according this invention can be applied to ink, plastic and paint. In these resins, the modified pearl pigments have good dispersibility.

### Testing of resistance to color change:

1) n-propyl gallate is a phenol derivative and can be used as antioxidant in polyolefins. Pearl pigment is blended with n-propyl gallate and then coated on color card. The color card is used for evaluation of pearl pigment's resistance to color change caused by antioxidant through comparative measurement.
   a) Production of blank sample
      1 g of each of the modified pearl pigment obtained in the examples and the comparative examples and unmodified pearl pigment were mixed respectively with 10 g of PU dispersion in a beaker. Mix fully till homogeneous to obtain the blank sample.
      The said PU is a dilute polyurethane with butyl ketone.
   b) Test sample production
      1 g of each of the modified pearl pigment obtained in the examples and the comparative examples and unmodified pearl pigment were mixed respectively with 10 g of PU dispersion containing 1% of n-propyl gallate in a beaker stir the mixtures fully to obtain the test sample.
   c) Contrast test
      The blank sample and test sample are coated on a color card of white background with a thickness of 150 µm. The card is then dried. The yellowness (b value) is measured with a spectrophotometer (X-Rite MA 68II, USA) and the difference Δb between bₜ of test sample and b_{b} of blank sample is used for evaluating the resistance of pearl to color change. The smaller the Δb, the less the yellowing is, it means, the higher the resistance to color change is.

The test results are listed in table 1:

**Table 1**

| Test sample | Δb |
|---|---|
| Example 1 | + 0.3 |
| Example 2 | + 0.2 |
| Example 3 | + 0.6 |
| Example 4 | + 0.2 |
| Example 5 | + 0.2 |
| Example 6 | + 0.3 |
| Example 7 | + 0.3 |
| Comp. Example 1 | + 0.7 |
| Comp. Example 2 | + 0.8 |
| Unmodified TZ1201 | + 5.3 |
| Unmodified TZ1005 | + 7.4 |

It can be seen from table 1 that pearl pigment made in this invention have smaller Δb value. Comparing with the pearl unmodified and the pearl in the comparative examples, pearl pigments made according to this invention have excellent resistance to color change caused by antioxidant.

### 2).UV irradiation method

The resistance of pearl to color change under UV irradiation is measured in QUV room.
a) Test sample production
   1g of pearl pigment and 0.1 g of antioxidant, BHT (BASF company, Germany) are added to a mixture of 99 g of HDPE (Sino-petro Yangtse Petroleum Chemical Ltd.) and a small amount of liquid paraffin (as lubricant, from Honeywell, company, Singapore). The mixture is fully mixed and mold to form PE test chips with a dimension of 5×7×2 cm.
b) Testing and measurement of test chips
   Test chips are placed 20 cm under UV lamp (20W) in the QUV room and are irradiated for 100 h at room temperature. The b values before and after irradiation were measured with a spectrophotometer (X-Rite MA 68II, USA) and Δb is calculated for evaluating the resistance of pearl to color change caused by UV irradiation. The smaller the Δb, the less the yellowing is, it means, the higher the resistance to color change is.

The test results are shown in table 2.

**Table 2**

| Test sample | Δb |
|---|---|
| Example 2 | + 0.62 |
| Example 4 | + 0.66 |
| Example 5 | + 0.63 |
| Example 6 | + 0.79 |
| Example 7 | + 0.70 |
| Comp. Example 1 | + 1.70 |
| Comp. Example 2 | + 1.20 |
| Unmodified TZ1201 | + 6.23 |
| Unmodified TZ1005 | + 7.24 |

It can be seen from table 2 that pearl pigment made in this invention have smaller Δb value. Comparing with the pearl pigments unmodified and the pearl pigments in the comparative examples studied, pearl pigments made according to this invention have excellent resistance to color change under UV irradiation.

### Preferred embodiments of the invention

### Example 1

(1) 50 g of silverly pearl pigment (TZ1005, particle diameter 10-60µm, TiO₂=29%) was added into 600 ml of soft water, and the resulting suspension was heated with stirring to 75°C and the temperature was kept constant.
(2)To above suspension 0.4g of phosphorous acid and 60ml of aqueous solution of AlCl₃.6 H₂O (conc. 200g/l) was added and stirred for another 15 min to fully mix the substances in the suspension. Then the NaOH of conc.10% was added slowly to raise the pH of suspension to 5.5.
(3) To the suspension 9 ml of aqueous solution of Na₂SiO₃(conc. 136g/l,SiO₂=21%) was added slowly. After that, kept on stirring for 20min.
(4) The coated pigment was recovered from the final suspension through filtration, washed using soft water to remove the soluble salts and dried at 120°C for 4h. Thereby a kind of modified pearl pigment was obtained.

### Example 2

(1)50 g of silverly pearl pigment (TZ1201, particle diameter 10-40µm, TiO₂=30%) was added into 600 ml of soft water, and the resulting suspension was heated with stirring to 75°C and the temperature was kept constant.
(2) To above suspension 0.4g of phosphorous acid and 10ml of aqueous solution of ZnCl₂ (conc. 120g/l) was added and stirred for another 15 min to fully mix the substances in the suspension. Then the NaOH of conc.10% was added slowly to raise the pH of suspension to 6.0.
(3)To the suspension 5 ml of aqueous solution of Na₂SiO₃(conc. 136g/l,SiO₂=21%) was added slowly. After that, kept on stirring for 30min.
(4) The coated pigment was isolated from the final suspension through filtration, washed using soft water to remove the soluble salts and dried at 120°C for 4h.Thereby a kind of modified silverly pearl pigment was obtained.

### Example 3

The procedure was the same with that in example 2, except the step (2) was modified as following:

To the suspension 0.4g of phosphorous acid and 5ml of aqueous solution of ZrOCl₂.8H2O (conc. 200g/l) was added and stirred for another 15 min. Then the NaOH of conc.10% was added slowly to raise the pH of suspension to 6.0.

### Example 4

(1) 50g of pearl pigment (the same with that in example 2) was mixed with 60 ml of soft water to form a suspension. The resulting suspension was heated to 75°C and the temperature was kept constant.
(2) To above suspension 0.3g of phosphorous acid and 6.6ml aqueous solution of ZnCl₂ (conc. 120g/l) was added and stirred for 10 min. Again, 3.5 ml of aqueous solution of AlCl₃.6 H₂O (conc. 200g/l) was added and stirred for another 10 min to fully mix the substances in the suspension. Then the NaOH of conc.10% was added slowly to raise the pH of suspension to 6.0.
(3) To the suspension 9 ml of aqueous solution of Na₂SiO₃(conc. 136g/l,SiO₂=21%) was added slowly. After that, kept on stirring for 20min.
(4) The coated pigment was recovered from the final suspension through filtration. Washed using soft water to remove the soluble salts and dried at 120°C for 4h.Thereby a kind of modified silverly pearl pigment was obtained.

### Example 5

The same with example 2, expect that the step (3) was cancelled.

### Example 6, 7

The same with example 2, 4, except that the dry temperature was 200°C.

### Comparative example 1, 2

The same with example 2, 4, except that the dried pigment in step (4) was calcined at high temperature of 850°C for 40min.

## Claims

1. A pearl pigment modified by post-coating process consists of three layers: the first one is platy substrate; the second layer is titanium dioxide coated on said substrate; and the third layer is a post-coating layer formed by coated on the titanium dioxide layer with metal salts of phosphorous acid and hydrous metal oxides.

2. The pearl pigment of claim 1 **characterized in that** said platy substrate is made of mica.

3. The pearl pigment of claim1 and 2, wherein the metal in said metal salts of phosphorous acid and hydrous metal oxides is selected at least one kind from the group consisting of aluminum, zinc, zirconium and magnesium.

4. The pearl pigment of claim 3, wherein said kinds of metal are Al and Zn.

5. The pearl pigment of claim 1, wherein said pearl pigment can further be coated with silicon oxide or hydrous silicon oxide.

6. The pearl pigment of claim 1, wherein the content of phosphite moity in said metal phosphite, when caculated as the phosphor element, is 0.01-2.0 wt% of said titanium dioxide.

7. The pearl pigment of claim 6, wherein said phosphor element, is 0.02-1.0 wt% of said titanium dioxide.

8. The pearl pigment of claim 1, wherein the content of metal in said metal salts of phosphorous acid and hydrous metal oxides, when caculated as the metal element is 0.1-7.0 wt% of said titanium dioxide.

9. The pearl pigment of claim 8, wherein said metal element is 0.1-5.0 wt% of said titanium dioxide.

10. The pearl pigment of claim 5, wherein the content of said coating of silicon oxide or hydrous silicon oxide, when caculated as the silicon element, is 0.2-3.0wt% of said titanium dioxide.

11. The pearl pigment of claim 5, wherein said silicon element is 0.2-2.5wt% of said titanium dioxide.

12. A process of preparing the modified pearl pigment of claim 1 comprising the step of:
(a) adding pearl pigment coated with titanium dioxide into deionized water ,mixing well, so as to obtain a suspension, and heating said suspension to 20-100°C.
(b) adding phosphorous acid or phosphates, to said suspension and adding diluted HCl ,if necessary, to lower the pH to below 2.0.
(c) adding at least one of soluble salts of Al, Zn and Mg, mixing well, then adding diluted alkaline solution slowly to raise the pH of said suspension to 4.0-8.0 so as to form hydrolysate of metal phosphite and hydrous metal oxides and precipitate on the surface of said titanium dioxide coating.
(d)filtering said suspension, thereby isolating said modified pearl pigment particles, washing the particles to remove soluble salt and drying the particles at 100-300°C to obtain modified pearl pigment.

13. The process of claim 12, further comprising the step of adding aqueous silicate solution following step (c) so as to form hydrous silicon dioxide and precipitate on the surface of pearl pigment particles.

14. The process of claim 12 and 13, wherein said temperature in step (a) is 50-80°C.

15. The process of claim 12 and 13, wherein said pH in step(c) can be adjusted to 5.5-6.5.

16. The process of claim 14, wherein said pH in step(c) can be adjusted to 5.5-6.5.

17. Use of the pearl pigment of claim 1 in ink, plastic and paint.
